# EUROPEAN PATENT APPLICATION

(11) **EP 4 576 564 A1**
(43) Date of publication of application: **25.06.2025**
(21) Application number: 24167838.2
(22) Date of filing: 29.03.2024
(51) Int. Cl.: H02S 30/20, H02S 40/32

(54) **PHOTOVOLTAIC SYSTEM AND PACKAGING METHOD THEREOF**

(30) Priority: 20.12.2023 CN 202311767054
(71) Applicant: Slenergy Technology (A.H.) Co., Ltd., 239299 Chuzhou City Anhui (CN)
(72) Inventor: ZHANG, Kechuang, CHUZHOU CITY, 239299 (CN); GONG, Fangtao, CHUZHOU CITY, 239299 (CN)
(74) Representative: Deambrogi, Edgardo

(57) **Abstract**

Provided are a photovoltaic system and a method for packaging the same. The photovoltaic system includes a photovoltaic assembly and a bracket. The bracket includes an inclined support rod and a support rod assembly. The inclined support rod is connected to the back side of the photovoltaic assembly. The support rod assembly includes a first support rod and a second support rod.The support rod assembly is configured to connect to an exterior structure. Therefore, the photovoltaic system can be folded for storage and can be convenient to mount on site, achieving integrated packaging, eliminating secondary sorting and packaging in a warehouse and effectively reducing the warehouse logistics cost.

## Description

### TECHNICAL FIELD

The present invention relates to the technical field of photovoltaic power generation and, in particular, to a photovoltaic system and packaging method thereof.

### BACKGROUND

A photovoltaic system includes a solar photovoltaic panel and a mounting bracket. Three-dimensional support is performed through the bracket to enable the solar photovoltaic panel to receive sunlight. In the related art, sub-products in the photovoltaic system are separately packaged, and assemblies in the photovoltaic system also need to be sorted and packaged in a warehouse for the second time, increasing the warehouse logistics cost; and the photovoltaic system has a relatively low pre-mounting degree and needs to be assembled as a whole on site, leading to inconvenience in assembly.

### SUMMARY

An object of the present invention is to provide a photovoltaic system and a method for packaging the same so that the photovoltaic system can be folded for storage and can be convenient to mount on site, achieving integrated packaging, eliminating secondary sorting and packaging in a warehouse and effectively reducing the warehouse logistics cost.

To achieve this object, the present invention adopts the technical solutions below.

A photovoltaic system is provided and includes a photovoltaic assembly and a bracket.

The bracket includes an inclined support rod connected to a back side of the photovoltaic assembly; and a support rod assembly including a first support rod and a second support rod, where a first end of the first support rob is hinged to an end of the inclined support rod, a first end of the second support rob is hinged to an other end of the inclined support rob, a second end of the second support rob is provided with a hinge, the hinge is connected to a second end of the first support rod through a fastener, and the support rod assembly is configured to connect to an exterior structure.

In some possible embodiments, two inclined support rods and two support rod assemblies are provided, and the two inclined support rods and the two support rod assemblies are disposed respectively.

In some possible embodiments, the photovoltaic system further includes a first cross bar and a second cross bar, the first cross bar is connected between first ends of two second support rods, the second cross bar is connected between second ends of the two second support rods, and the first cross bar and the second cross bar are each vertical to the two second support rods.

In some possible embodiments, the photovoltaic system further includes an inverter detachably connected to the first cross bar.

In some possible embodiments, the first cross bar and the second cross bar are each provided with elongated holes; and/or the support rod assembly further includes a hook detachably connected to the second support rod.

In some possible embodiments, the first support rod and the second support rod are retractable rods.

In some possible embodiments, a width of an opening of a mounting groove of the hinge is not smaller than a width of the inclined support rod to enable the inclined support rod to be accommodated within the mounting groove.

A method for packaging a photovoltaic system is provided and includes the steps below.

A photovoltaic assembly, an inclined support rod, a first support rod, a second support rod and a hinge are pre-assembled, and the first support rod and the second support rod are folded toward the inclined support rod separately.

A photovoltaic system is placed in a packaging box, and the photovoltaic system is secured within the packaging box through a liner assembly.

The liner assembly is provided with a hollow portion, and an accessory box is snapped into the hollow portion.

In some possible embodiments, two inclined support rods and two support rod assemblies are provided, and the two inclined support rods and the two support rod assemblies are disposed respectively; the photovoltaic system further includes a first cross bar and a second cross bar, the first cross bar is connected between first ends of two second support rods, the second cross bar is connected between second ends of the two second support rods, and the first cross bar and the second cross bar are each vertical to the two second support rods; the hollow portion is divided into a first hollow portion and a second hollow portion; and when the liner assembly includes a plurality of liners, and the photovoltaic system is secured within the packaging box through the liner assembly, the method includes the steps below.

A four-sided bezel is formed by the first cross bar, the second cross bar and the two second support rods, two of the plurality of liners are disposed within the four-sided bezel, and the first hollow portion is formed between the two of the plurality of liners.

A four-sided bezel is formed by the second cross bar, two first support rods and the packaging box, two of the plurality of liners are disposed within the four-sided bezel, and the second hollow portion is formed between the two of the plurality of liners.

In some possible embodiments, the photovoltaic system further includes an inverter disposed on the first cross bar and a hook detachably connected to the second support rod; and when two accessory boxes are provided and snapped into the hollow portion, the method includes the step below.

The inverter and the hook are disposed within the two accessory boxes respectively, and the two accessory boxes are disposed in the first hollow portion and the second hollow portion respectively.

The present invention has the beneficial effects below.

In the photovoltaic system and the method for packaging the same that are provided in the present invention, during transportation, the bracket and the photovoltaic assembly are pre-assembled, the first support rod and the second support rod are folded toward the inclined support rod for storage so that the bracket and the photovoltaic assembly can be packaged as a whole, achieving integrated packaging, eliminating secondary sorting and packaging in a warehouse and effectively reducing the warehouse logistics cost. During on-site assembly, the hinge is connected to the first support rod merely through fasteners such as screws, and then the support rod assembly is connected to the exterior structure so that on-site mounting can become convenient.

### BRIEF DESCRIPTION OF DRAWINGS

FIG. 1 is a view illustrating a photovoltaic system in a used state according to a specific embodiment of the present invention.
FIG. 2 is an exploded view illustrating a photovoltaic system in a folded state along with a liner assembly and a packaging box according to a specific embodiment of the present invention.
FIG. 3 is a view illustrating a photovoltaic system in a packaged state according to a specific embodiment of the present invention.
FIG. 4 is a flowchart of a method for packaging a photovoltaic system according to a specific embodiment of the present invention.

### Reference list

- 1: photovoltaic assembly
- 11: bezel
- 12: solar photovoltaic panel
- 2: bracket
- 21: inclined support rod
- 22: support rod assembly
- 221: first support rod
- 2211: scale identification
- 222: second support rod
- 23: hinge
- 24: first cross bar
- 241: elongated hole
- 25: second cross bar
- 26: inverter
- 27: hook
- 100: packaging box
- 200: liner assembly
- 201: hollow portion
- 2011: first hollow portion
- 2012: second hollow portion
- 202: liner
- 203: support corner protector
- 300: accessory box

### DETAILED DESCRIPTION

To make solved technical problems, provided technical solutions, and achieved technical effects of the present invention clearer, the technical solutions in embodiments of the present invention are further described in detail hereinafter in conjunction with the drawings. Apparently, the embodiments described below are part, not all, of the embodiments of the present invention. Based on the embodiments of the present invention, all other embodiments obtained by those skilled in the art are within the scope of the present invention on the premise that no creative work is done.

In the description of the present invention, unless otherwise expressly specified and limited, the term "connected to each other", "connected" or "secured" is to be construed in a broad sense, for example, as securely connected, detachably connected or integrated; mechanically connected or electrically connected; directly connected to each other or indirectly connected to each other via an intermediary; or internal connection between two components or interaction relations between two components. For those of ordinary skill in the art, specific meanings of the preceding terms in the present invention may be construed based on specific situations.

In the present invention, unless otherwise expressly specified and limited, when a first feature is described as "above" or "below" a second feature, the first feature and the second feature may be in direct contact or be in contact via another feature between the two features. Moreover, when the first feature is described as "on", "above", or "over" the second feature, the first feature is right on, above, or over the second feature, the first feature is obliquely on, above, or over the second feature, or the first feature is simply at a higher level than the second feature. When the first feature is described as "under", "below" or "underneath" the second feature, the first feature is right under, below or underneath the second feature, the first feature is obliquely under, below or underneath the second feature, or the first feature is simply at a lower level than the second feature.

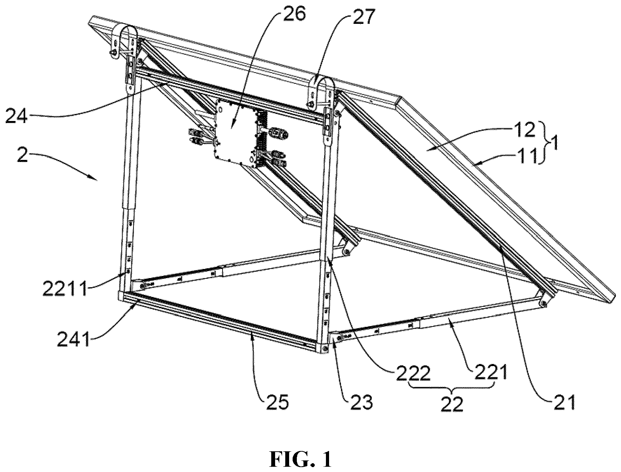

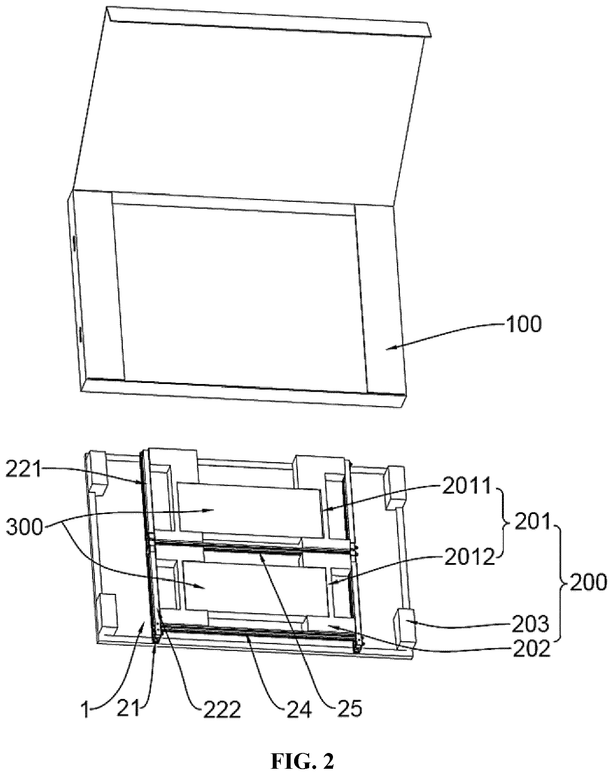

As shown in FIGS. 1 and 2, this embodiment provides a photovoltaic system. The photovoltaic system includes a photovoltaic assembly 1 and a bracket 2. The bracket 2 includes an inclined support rod 21 and a support rod assembly 22. The inclined support rod 21 is connected to the back side of the photovoltaic assembly 1. The support rod assembly 22 includes a first support rod 221 and a second support rod 222. The first end of the first support rod 221 is hinged to an end of the inclined support rod 21, and the first end of the second support rod 222 is hinged to the other end of the inclined support rod 21. The second end of the second support rod 222 is provided with a hinge 23. The hinge 23 is connected to the second end of the first support rod 221 through a fastener. The support rod assembly 22 is configured to connect to an exterior structure.

During transportation, the bracket 2 and the photovoltaic assembly 1 are pre-assembled, the first support rod 221 and the second support rod 222 are folded toward the inclined support rod 21 for storage so that the bracket 2 and the photovoltaic assembly 1 can be packaged as a whole, achieving integrated packaging, eliminating secondary sorting and packaging in a warehouse and effectively reducing the warehouse logistics cost. During on-site assembly, the hinge 23 is connected to the first support rod 221 merely through fasteners such as screws, and then the support rod assembly 22 is connected to the exterior structure so that on-site mounting can become convenient.

The first support rod 221 and the second support rod 222 are retractable rods. During use, the first support rod 221 and the second support rod 222 are rotated and opened, the retractable lengths of the first support rod 221 and the second support rod 222 are adjusted to the required angle positions, and then the hinge 23 is connected to the first support rod 221 through the fasteners so that the photovoltaic assembly 1 can be supported at multiple angles and can be adjusted to the optimal inclination angle according to a mounting location to better receive sunlight and maximize power generation. Further, each retractable rod is provided with a scale identification 2211 so that the angle adjustment precision can be increased.

Two inclined support rods 21 and two support rod assemblies 22 are provided, and the two inclined support rods 21 and the two support rod assemblies 22 are disposed respectively. The number of inclined support rods 21 and support rod assemblies 22 are increased so that the reliability of the bracket 2 supporting the photovoltaic assembly 1 can be improved. Further, the photovoltaic system further includes a first cross bar 24 and a second cross bar 25. The first cross bar 24 is connected between first ends of two second support rods 222. The second cross bar 25 is connected between second ends of the two second support rods 222. The first cross bar 24 and the second cross bar 25 are each vertical to the two second support rods 222. The first cross bar 24 and the second cross bar 25 are each connected between two first support rods 221 and the two second support rods 222 so that the structural strength of the two support rod assemblies 22 can be improved, and so that the two first support rods 221 can be rotated simultaneously, and the two second support rods 222 can be rotated simultaneously, further facilitating folding for storage or opening for use.

In an embodiment, the first cross bar 24 and the second cross bar 25 are each provided with elongated holes 241. In a scenario where the photovoltaic system is mounted to the surface of a wall, expansion bolts may be used for mounting and securing through the elongated holes 241. Specifically, two ends of the first cross bar 24 are provided with two elongated holes 241 respectively, and two ends of the second cross bar 25 are provided with two elongated holes 241 respectively, so four expansion bolts are used for mounting and securing. In another embodiment, the support rod assembly 22 further includes a hook 27 detachably connected to the second support rod 222. In a scenario where the photovoltaic system is mounted to a balcony fence, the hook 27 may be used for securing. Specifically, an end of the hook 27 is locked to the first end of the second support rod 222 through screws, and the other end of the hook 27 is locked to a handrail of the balcony fence through screws. Finally, four hose clamps are used for locking and securing intersections between the first cross bar 24 and a vertical rod of the balcony fence and between the second cross bar 25 and the vertical rod of the balcony fence respectively, ensuring the mounting reliability. The hook 27 is disposed, or the first cross rod 24 and the second cross rod 25 are each provided with the elongated holes 241 so that multi-scenario applications can be achieved.

The photovoltaic system further includes an inverter 26 detachably connected to the first cross bar 24, for example, through fasteners such as screws.

The width of an opening of a mounting groove of the hinge 23 is not smaller than the width of the inclined support rod 21 to enable the inclined support rod 21 to be accommodated within the mounting groove so that the occupied space can be reduced when the support rod assembly 22 is folded, the packaging of the photovoltaic system can be facilitated, and the packaging volume can be reduced. When being accommodated within the mounting groove, the inclined support rod 21 plays a position-limiting role to a certain extent so that a more stable mounting of the photovoltaic system located within the packaging box 100 can be ensured.

The photovoltaic assembly 1 includes a bezel 11 and a solar photovoltaic panel 12 disposed on the bezel 11, and the inclined support rod 21 is connected to the bezel 11. Specifically, the inclined support rod 21 is connected to the bezel 11 through screws.

Optionally, the first cross bar 24, the second cross bar 25 and the two inclined support rods 21 each have a structure made of aluminum profiles, so no punching is needed, and the assembly can be facilitated.

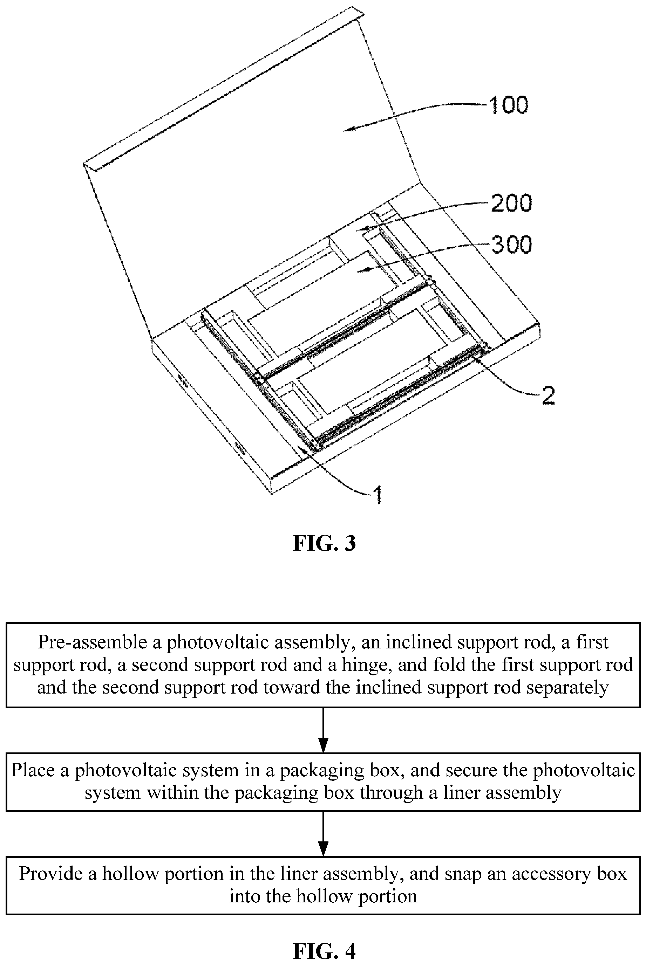

As shown in FIGS. 1 to 4, this embodiment further provides a method for packaging the preceding photovoltaic system. The method includes the steps below.

In S 100, a photovoltaic assembly 1, an inclined support rod 21, a first support rod 221, a second support rod 222 and a hinge 23 are pre-assembled, and the first support rod 221 and the second support rod 222 are folded toward the inclined support rod 21 separately.

In S200, a photovoltaic system is placed in a packaging box 100, and the photovoltaic system is secured within the packaging box 100 through a liner assembly 200.

In S300, the liner assembly 200 is provided with a hollow portion 201, and an accessory box 300 is snapped into the hollow portion 201.The photovoltaic assembly 1 and part of the bracket 2 are pre-assembled, and during on-site assembly, the hinge 23 merely needs to be mounted to the second support rod 222 through fasteners such as screws so that the assembly can become convenient. The photovoltaic system is folded for storage so that the integrated packaging of the photovoltaic system can be achieved within the packaging box 100, and the liner assembly 200 can improve the mounting stability, effectively reducing the warehouse logistics cost.

Specifically, the liner assembly 200 includes a protective layer, liners 202 and support corner protectors 203, and in step S200, the specific steps are included below.

S201, the protective layer overspreads the bottom of the packaging box 100 and has a structure made of expanded polyethylene (EPE) with a thickness of 5 mm.

In S202, the photovoltaic system is placed in the packaging box 100.

In S203, the support corner protectors 203 are placed in the packaging box 100 and mounted to four corners of the photovoltaic assembly 1 respectively.

In S204, the liners 202 are placed in the packaging box 100 to enable the bracket 2 to be located between the liners 202. Specifically, the support corner protectors 203 and the liners 202 are each made of EPE.

Two inclined support rods 21 and two support rod assemblies 22 are provided, and the two inclined support rods 21 and the two support rod assemblies 22 are disposed respectively; the photovoltaic system further includes a first cross bar 24 and a second cross bar 25, the first cross bar 24 is connected between first ends of two second support rods 222, the second cross bar 25 is connected between second ends of the two second support rods 222, and the first cross bar 24 and the second cross bar 25 are each vertical to the two second support rods 222; the hollow portion 201 is divided into a first hollow portion 2011 and a second hollow portion 2012; and when the liner assembly 200 includes multiple liners 202, and the photovoltaic assembly 1 is secured within the packaging box 100 through the liner assembly 200, the method includes the steps below.

In S2041, a four-sided bezel 11 is formed by the first cross bar 24, the second cross rod 25 and the two second support rods 222, two liners 202 are disposed within the four-sided bezel 11, and the first hollow portion 2011 is formed between the two liners 202.

In S2042, a four-sided bezel 11 is formed by the second cross rod 25, two first support rods 221 and the packaging box 100, two liners 202 are disposed within the four-sided bezel 11, and the second hollow portion 2012 is formed between the two liners 202.

The photovoltaic system further includes an inverter 26 disposed on the first cross bar 24 and a hook 27 detachably connected to the second support rod 222, and when two accessory boxes 300 are provided and snapped into the hollow portion 201, the method includes the step below.

The inverter 26 and the hook 27 are disposed within the two accessory boxes 300 respectively, and the two accessory boxes 300 are disposed in the first hollow portion 2011 and the second hollow portion 2012 respectively. Optionally, the screws and others may be disposed in the same accessory box 300 as the hook 27 and others.

Apparently, the preceding embodiments of the present invention are merely illustrative of the present invention and are not intended to limit the implementations of the present invention. For those of ordinary skill in the art, changes or alterations in other different forms may also be made based on the preceding description. All implementations cannot be and do not need to be exhausted herein. Any modifications, equivalent substitutions and improvements made within the spirit and principle of the present invention fall within the scope of the claims of the present invention.

## Claims

1. A photovoltaic system, comprising a photovoltaic assembly (1) and a bracket (2), wherein the bracket (2) comprises:
an inclined support rod (21) connected to a back side of the photovoltaic assembly (1); and
a support rod assembly (22) comprising a first support rod (221) and a second support rod (222), wherein a first end of the first support rob (221) is hinged to an end of the inclined support rod (21), a first end of the second support rob (222) is hinged to an other end of the inclined support rob (21), a second end of the second support rob (222) is provided with a hinge (23), the hinge (23) is connected to a second end of the first support rod (221) through a fastener, and the support rod assembly (22) is configured to connect to an exterior structure.

2. The photovoltaic system according to claim 1, wherein two inclined support rods (21) and two support rod assemblies (22) are provided, and the two inclined support rods (21) are in one-to-one correspondence with the two support rod assemblies (22).

3. The photovoltaic system according to claim 2, further comprising a first cross bar (24) and a second cross bar (25), wherein the first cross bar (24) is connected between first ends of two second support rods (222), the second cross bar (25) is connected between second ends of the two second support rods (222), and the first cross bar (24) and the second cross bar (25) are each vertical to the two second support rods (222).

4. The photovoltaic system according to claim 3, further comprising an inverter (26) detachably connected to the first cross bar (24).

5. The photovoltaic system according to claim 3, wherein
the first cross bar (24) and the second cross bar (25) are each provided with elongated holes (241); and/or
the support rod assembly (22) further comprises a hook (27) detachably connected to the second support rod (222).

6. The photovoltaic system according to claim 1, wherein the first support rod (221) and the second support rod (222) are retractable rods.

7. The photovoltaic system according to any one of claims 1 to 6, wherein a width of an opening of a mounting groove of the hinge (23) is not smaller than a width of the inclined support rod (21) to enable the inclined support rod (21) to be accommodated within the mounting groove.

8. A method for packaging the photovoltaic system according to any one of claims 1 to 7, comprising:
pre-assembling the photovoltaic assembly (1), the inclined support rod (21), the first support rod (221), the second support rod (222) and the hinge (23), and folding the first support rod (221) and the second support rod (222) toward the inclined support rod (21) separately;
placing the photovoltaic system in a packaging box (100), and securing the photovoltaic system within the packaging box (100) through a liner assembly (200), wherein the liner assembly (200) is provided with a hollow portion (201); and
snapping an accessory box (300) into the hollow portion (201).

9. The method for packaging the photovoltaic system according to claim 8, wherein two inclined support rods (21) and two support rod assemblies (22) are provided, and the two inclined support rods (21) are in one-to-one correspondence with the two support rod assemblies (22); the photovoltaic system further comprises a first cross bar (24) and a second cross bar (25), the first cross bar (24) is connected between first ends of two second support rods (222), the second cross bar (25) is connected between second ends of the two second support rods (222), and the first cross bar (24) and the second cross bar (25) are each vertical to the two second support rods (222); the hollow portion (201) is divided into a first hollow portion (2011) and a second hollow portion (2012); and wherein the liner assembly (200) comprises a plurality of liners (202), and securing the photovoltaic system within the packaging box (100) through a liner assembly (200) comprises:
forming a four-sided bezel (11) by the first cross bar (24), the second cross bar (25) and the two second support rods (222), disposing two of the plurality of liners (202) within the four-sided bezel (11), and forming the first hollow portion (2011) between the two of the plurality of liners (202); and
forming a four-sided bezel (11) by the second cross bar (25), two first support rods (221) and the packaging box (100), disposing two of the plurality of liners (202) within the four-sided bezel (11), and forming the second hollow portion (2012) between the two of the plurality of liners (202).

10. The method for packaging the photovoltaic system according to claim 9, wherein the photovoltaic system further comprises an inverter (26) disposed on the first cross bar (24) and a hook (27) detachably connected to the first support rod (221); and wherein two accessory boxes (300) are provided and snapping the accessory box (300) into the hollow portion (201) comprises:
disposing the inverter (26) and the hook (27) within the two accessory boxes (300) respectively, and disposing the two accessory boxes (300) in the first hollow portion (2011) and the second hollow portion (2012) respectively.
